# EUROPÄISCHE PATENTSCHRIFT

(11) **EP 2 926 124 B1**
(45) Veröffentlichungstag und Bekanntmachung des Hinweises auf die Patenterteilung: **09.01.2019**
(21) Anmeldenummer: 13782684.8
(22) Anmeldetag: 22.10.2013
(51) Int. Cl.: G01N 23/223

(54) **VERFAHREN UND VORRICHTUNG ZUR DURCHFÜHRUNG EINER RÖNTGENFLUORESZENZANALYSE**
METHOD AND DEVICE FOR PERFORMING AN X-RAY FLUORESCENCE ANALYSIS
PROCÉDÉ ET DISPOSITIF DE RÉALISATION D'UNE ANALYSE PAR FLUORESCENCE X

(30) Priorität: 29.11.2012 DE 102012111572
(43) Veröffentlichungstag der Anmeldung: 07.10.2015
(73) Patentinhaber: Helmut Fischer GmbH Institut für Elektronik und Messtechnik., 71069 Sindelfingen (DE)
(72) Erfinder: KESSLER, Jens, 70191 Stuttgart (DE)
(74) Vertreter: Mammel und Maser
(86) Internationale Anmeldenummer: PCT/EP2013/072001
(87) Internationale Veröffentlichungsnummer: WO 2014/082795

(56) Entgegenhaltungen:
- EP-A2- 0 091 884
- WO-A2-2009/156898
- AT-B- 300 420
- SU-A1- 543 289
- US-A- 4 393 512
- I. G. GRIGORIEVA ET AL: "HOPG as powerful x-ray optics", X-RAY SPECTROMETRY, Bd. 32, Nr. 1, 2. Januar 2003 (2003-01-02) , Seiten 64-68, XP055093373, ISSN: 0049-8246, DOI: 10.1002/xrs.617
- Burkhard Beckhoff ET AL: "New broad-hand filtering device with rectangular efficiency shape based on X-ray focusing by strongly curved HOPG crystals", Proc. SPIE 2859, Hard X-Ray/Gamma-Ray and Neutron Optics, Sensors, and Applications, 19. Juli 1996 (1996-07-19), Seiten 190-191, XP055093369, Denver DOI: http://dx.doi.org/10.1117/12.245140 Gefunden im Internet: URL:http://proceedings.spiedigitallibrary. org/data/Conferences/SPIEP/60457/190_1.pdf [gefunden am 2013-12-13]

## Beschreibung

### Verfahren und Vorrichtung zur Durchführung einer Röntgenfluoreszenzanalyse sowie Filter hierzu

Die Erfindung betrifft ein Verfahren zur Durchführung einer Röntgenfluoreszenzanalyse, sowie eine Vorrichtung zur Durchführung eines solchen Verfahrens.

Die Röntgenfluoreszenzanalyse ist allgemein bekannt. Durch eine Röntgenfluoreszenzanalyse kann eine Schichtdickenmessung und/oder eine qualitative und quantitative Bestimmung der elementaren Zusammensetzung einer Probe ermittelt werden. Der Vorteil liegt in der zerstörungsfreien Messung. Beispielsweise wird eine solche Röntgenfluoreszenzanalyse in der metallverarbeitenden Industrie bei der Untersuchung und Prüfung von Legierungen oder Prüfung von Legierungen oder Legierungsbestandteilen oder Schichten eingesetzt.

Bei vielen Anwendungen besteht das Problem, dass ein Signal von einem metallischen Untergrund, beispielsweise ein Signal eines Eisenbestandteils, störend ist und die Detektion von einzelnen bestimmten Legierungsbestandteilen beziehungsweise -elementen oder -schichten nicht mit der gewünschten oder erforderlichen Signalstärke durch den Detektor erfasst werden können. Dies liegt zum einen daran, dass der Detektor durch dieses störende Signal weitestgehend ausgelastet ist und somit nur ein geringer Teil der weiteren Bestandteile der Schicht ermittelt werden kann oder dieses störende Signal die weitere schwächere emittierte Strahlung überlagert.

Aus der AT 300 420 B ist eine Einrichtung zur Röntgenfluoreszenzanalyse von Überzügen auf einem Substrat mit einem Filter im Sekundärstrahlengang zwischen einer Probe und einem Detektor bekannt. Dadurch können unerwünschte Sekundärstrahlenanteile des Substrats aus dem Sekundärstrahlengang herausgefiltert und so die Messgenauigkeit für den Überzug erhöht werden.

Des Weiteren ist aus der WO 2009/156898 A2 ein medizinisches Untersuchungsgerät bekannt, welches polychromatische Röntgenstrahlung einsetzt. Durch eine Röntgenröhre werden die Röntgenstrahlen auf eine Untersuchungszone ausgestrahlt, welche nach dem Durchdringen des Bereichs der Untersuchungszone von einem Detektor erfasst werden. Zwischen der Röntgenröhre zur Aussendung der Röntgenstrahlung und der Untersuchungszone ist ein Bragg-Filter vorgesehen, welcher eine unter einem bestimmten Winkel und mit einer bestimmten Wellenlänge auf den Bragg'schen Filter auftretende Strahlung auskoppelt.

Des Weiteren ist aus "X-Ray Spectrometry", Band 2, Nr. 1, 1. Januar 2003, Seiten 64 bis 68 mit dem Titel "HOPG as powerful x-ray optics" von I.G. Grigorieva et al. bekannt, kristalline Schichten (HOPG) auf gekrümmte Oberflächen aufzubringen, um Reflektionen zu erzielen. Aus Burkhard Beckhoff ET AL: "New broad-hand filtering device with rectangular efficiency shape based on X-ray focusing by strongly curved HOPG crystals", Proc. SPIE 2859, Hard X-Ray/Gamma-Ray and Neutron Optics, Sensors, and Applicatons, 19. Juli 1996 (1996-07-19), Seiten 190-191, XP055093369, ist die Fokussierung von Röntgenstrahlen an gekrümmten kristallischen Oberflächen bekannt.

Der Erfindung liegt die Aufgabe zugrunde, ein Verfahren sowie eine Vorrichtung zur Durchführung des Verfahrens als auch einen Filter vorzuschlagen, wodurch ein einfaches Selektieren von unerwünschten Wellenlängen bzw. Energien ermöglicht ist, um die Messgenauigkeit zu erhöhen.

Diese Aufgabe wird erfindungsgemäß durch ein Verfahren zur Durchführung einer Röntgenfluoreszenzanalyse gelöst, bei welcher in den Strahlengang der Sekundärstrahlung zumindest ein Filter mit zumindest einer eine Filterebene bildenden kristallinen Schicht eingebracht wird, der als Bandfilter wirkt. Der Filter wird in einem Winkel α zum Strahlengang zur Reflexion von zumindest einer Wellenlänge der Sekundärstrahlung durch Braggsche Reflexion eingestellt. Eine durch Braggsche Reflexion ausgekoppelte störende Wellenlänge der Sekundärstrahlung wird durch einen zweiten Detektor erfasst. Die daraus ermittelten Signale werden an die Auswerteeinheit weitergeleitet. Diese Auswerteeinheit kann Werte bzw. Informationen für die Einstelleinrichtung ausgeben, durch welche der Winkel α der Filterschicht des Filters zum Sekundärstrahlengang einstellbar ist. Durch dieses Verfahren wird in einfacher Weise mittels des Filters eine Selektion von Röntgenfluoreszenzlinien bzw. einzelnen Wellenlängen der Sekundärstrahlung ermöglicht, so dass beispielsweise die am meisten störende Strahlung oder störenden Strahlungen durch Braggsche Reflexion herausgefiltert werden können. Bei der Messung von einem Legierungselement oder einer Schicht eines Probenkörpers werden also die charakteristischen Fluoreszenzlinien von der kristallinen Schicht des Filters durchgelassen, und eine oder mehrere benachbarte Fluoreszenzlinien oder teils überlappenden Fluoreszenzlinien werden durch den Filter aufgrund der Braggschen Reflexion reflektiert oder abgelenkt. Durch die Erfassung der ausgekoppelten störenden Strahlung mittels einem zweiten Detektor kann ermittelt werden, ob die auszukoppelnde störende Strahlung teils oder vollständig aus dem Sekundärstrahl ausgekoppelt wird. Somit kann eine Optimierung in der Einstellung der Winkellage des Filters zum Strahlengang der Sekundärstrahlung vorgenommen werden. Durch die Optimierung der Auskopplung der störenden Strahlung kann eine zuverlässige und exakte Bestimmung der Wellenlänge der Sekundärstrahlung für den oder die zu detektierenden Legierungsbestandteile oder die zu detektierende Schicht erfasst werden.

Bei Durchführung der Röntgenanalyse wird der Filter in einem Winkel α zum Strahlengang auf den zu detektierenden Bestandteil des Probenkörpers in Abhängigkeit der vom zweiten Detektor erfassten Signale eingestellt. Aufgrund der Braggschen Gleichungen und den Eigenschaften der zumindest einen die Filterschicht bildende, vorzugsweise kristalline Schicht kann der Winkel α ermittelt werden, um diejenige Strahlung bzw. Wellenlänge an dem Filter zu beugen, die für die Detektion des Bestandteils im Probenkörper nicht erforderlich oder sogar störend sind und diejenigen Wellenlängen der Strahlung durchlässt, durch welche der Bestandteil oder die Schicht detektiert und bestimmt werden soll.

Die herauszufilternde Strahlung beziehungsweise die an dem Filter reflektierte Strahlung wird durch einen zweiten Detektor ermittelt, dessen Messdaten durch die Auswerteeinrichtung ausgewertet werden. Dies ermöglicht nicht nur die Überprüfung, ob die gewünschte Strahlung herausgefiltert wird, sondern auch nach einem Vergleich von Ist- und Sollwerten zwischen der zu detektierenden Wellenlänge und/oder störenden Wellenlänge eine entsprechende Einstellung oder Ansteuerung der Einstelleinrichtung zur Veränderung der Winkellage des Filters, um eine Optimierung in der Winkeleinstellung des Filters zum Strahlengang der Sekundärstrahlung zu erzielen, so dass eine maximale Filterung der störenden Strahlung möglich ist.

Die der Erfindung zugrunde liegende Aufgabe wird des Weiteren durch eine Vorrichtung zur Durchführung der Röntgenfluoreszenzanalyse gelöst, bei der in dem Strahlengang der Sekundärstrahlung ein Filter positionierbar ist, wobei der Filter in einer Filterebene eine Filterschicht aufweist, um eine Strahlung mit einer Wellenlänge der Sekundärstrahlung durch Braggsche Reflexion zu reflektieren und einem zweiten Detektor zuzuführen, dessen Signale von einer Auswerteeinrichtung erfassbar sind. Dadurch kann ein störendes Signal in optimaler Weise herausgefiltert werden. Beispielsweise bei einem Probenkörper, der eine sehr dünne Schicht auf einem Grundkörper aus Eisen umfasst, stellt das Eisen ein störendes Signal dar, welches die von der Schicht abgebenden Signale überlagert. Hinzu kommen kann, dass zumeist der Eisenanteil für die Ermittlung nicht relevant oder interessant ist. Gleiches gilt beispielsweise bei der Prüfung einer dünnen Folie oder eines Films, der entlang einer Transportrolle, insbesondere einer Eisenrolle, geführt wird. Dadurch können auch die emittierten Strahlen der Eisen- oder Transportrolle die emittierten Strahlen aus der zu prüfenden Schicht überlagern oder beeinträchtigen. Durch die Braggsche Reflexion am Filter kann gerade diese Störgröße eliminiert werden. Das Positionieren des Filters im Sekundärstrahlengang dient also zur Filterung bzw. Selektion von Strahlung. Der zusätzliche Detektor, welcher die zumindest eine an dem Filter durch Reflexion ausgekoppelte Wellenlänge der Sekundärstrahlung erfasst, ermöglicht gleichzeitig ein Abgleich mit dem erfassten Ist-Wert und Soll-Wert bezüglich der auszukoppelnden Wellenlänge, so dass gegebenenfalls die Winkellage des Filters durch die Ausgabe von Information durch die Auswerteeinheit oder durch Ansteuerung der Einstelleinrichtung über die Auswerteeinheit nachjustiert wird, so dass die zumindest eine störende Wellenlänge mit einem Maximum auskoppelbar ist.

Der Filter ist bevorzugt von einer Einstelleinrichtung aufgenommen, durch welche eine Einstellung des Winkels α zwischen dem Filter und dem Strahlengang ansteuerbar ist. Diese Einstellung kann fest vorgesehen sein. Alternativ kann auch eine manuelle oder motorische Einstellung ermöglicht sein.

Die Einstelleinrichtung ist bevorzugt von der Auswerteeinheit ansteuerbar, so dass eine exakte Positionierung des Filters als auch eine automatische Positionierung des Filters zum Strahlengang der Primär- und/oder Sekundärstrahlung ermöglicht ist.

Der Filter zur Durchführung des Verfahrens sowie für die Vorrichtung zur Durchführung des Verfahrens kann in einer Filterebene eine Filterschicht aus einer kristallinen Schicht aufweisen. Dieser Filter weist einen Träger mit einer Bohrung oder Durchbrechung auf, auf den die zumindest eine Folie als Filterschicht aufgeklebt oder durch Adhäsion aufgebracht ist, wobei die zumindest eine Filterschicht die Bohrung oder Durchbrechung überdeckt. Es hat sich erstaunlicherweise herausgestellt, dass sich ein solcher Filter mit einer kristallinen Schicht im Transmissionsmodus zur selektiven Reflexion von einzelnen Wellenlängen eignet und darüber hinaus leicht auf die zu selektierende Wellenlänge der Strahlung einstellen lässt.

Nach einer bevorzugten Ausgestaltung des Filters ist vorgesehen, dass die Filterschicht aus der zumindest einen kristallinen Schicht oder kristalline Graphitschicht als Folie ausgebildet ist.

Bevorzugt ist vorgesehen, dass die kristalline Schicht als Grafitschicht ausgebildet ist. Diese Schicht aus Kohlenstoffatomen umfasst ein hexagonales Netzwerk. Dadurch kann in Abhängigkeit des Netzebenenabstandes der Schicht und dem Einfallswinkel der Strahlung auf diese Schicht die Braggsche Reflexion für bestimmte Wellenlängenbereiche der Primär- und/oder Sekundärstrahlung erfolgen.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigt:

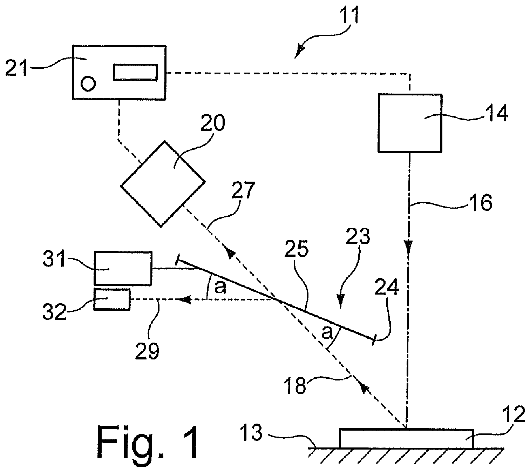

Figur 1 eine schematische Ansicht einer Vorrichtung zur Durchführung einer Röntgenfluoreszenzanalyse.

In Figur 1 ist schematisch eine Vorrichtung 11 zur Durchführung einer Röntgenfluoreszenzanalyse in einem Probenkörper 12, wie beispielsweise einer Goldmünze, dargestellt. Diese Vorrichtung 11 umfasst eine Röntgenstrahlungsquelle 14 bzw. eine Röntgenröhre über die eine Primärstrahlung 16 ausgegeben und auf den Probenkörper 12 gerichtet ist, der von einem Probenträger 13 aufgenommen ist. Der Probenträger 13 kann in der Lage und Höhe einstellbar sein. Der Primärstrahl 16 kann beispielsweise über einen nicht näher dargestellten Kollimator fokussiert werden. Der Primärstrahl 16 wird beispielsweise senkrecht oder in einem davon abweichenden Winkel zur Oberfläche des Probenkörpers 12 auf den Probenkörper 12 gerichtet. Dabei wird eine Röntgenfluoreszenzstrahlung in der Oberfläche des Probenkörpers 12 angeregt, welche als Sekundärstrahlung 16 aus dem Probenkörper 12 emittiert und von einem, vorzugsweise energiedispersiven, Detektor 20 erfasst wird. Eine Auswertung der erfassten Messergebnisse durch den Detektor 20 erfolgt über eine Auswerteeinheit 21, die die erfassten Daten auswertet und ausgibt. In dem Strahlengang der Sekundärstrahlung 18 ist ein Filter 23 positioniert.

Dieser Filter 23 ist als Transmissionsfilter ausgebildet. Der Filter 23 umfasst eine Filterschicht 25, welche in einer Filterebene liegt. Die Filterschicht 25 ist beispielsweise als kristalline Schicht, insbesondere als Grafitschicht ausgebildet. Gemäß einer ersten Ausführungsform kann nur eine Grafitschicht die Filterschicht 25 bilden. Alternativ können auch mehrere Lagen von solchen Grafitschichten übereinanderliegend vorgesehen sein und die Filterschicht 25 bilden. Durch die Kristallstruktur der einzelnen Grafitschichten werden bei der Transmission der Strahlung durch den Filter 22 eine Wellenlänge reflektiert beziehungsweise herausgefiltert und somit selektiert, das heißt, dass in Abhängigkeit eines Winkels, in welchem die Filterebene des Filters 23 zum Strahlengang positioniert ist, die Filterebene für viele Wellenlängen oder Energien der Strahlung durchlässig ist und eine Wellenlänge gebeugt wird. Dadurch erfolgt ein selektives Ausfiltern von einzelnen Wellen der Strahlung.

Der Filter 23 kann gemäß einer ersten Ausführungsform bspw. durch einen Rahmen aufgebaut sein, durch den die insbesondere als Folie ausgebildete Filterschicht 25 aufgespannt gehalten ist. Es kann auch vorgesehen sein, dass diese als Folie ausgebildete Filterschicht 25 zwischen zwei Rahmenelementen eingespannt gehalten ist. Ein weiterer alternativer Aufbau des Filters 23 sieht vor, dass ein Träger oder ein Trägersubstrat mit einer Bohrung oder einer Durchbrechung vorgesehen ist und auf diesen Träger die zumindest eine Folie als Filterschicht 25 aufgeklebt oder durch Adhäsion aufgebracht ist, wobei diese zumindest eine Folie bzw. Filterschicht die Bohrung oder die Durchbrechung überdeckt. Alternativ kann die Folie bzw. Filterschicht 25 auch zwischen zwei solchen Trägern eingelegt sein und gehalten werden.

Bei dem Rahmen kann bspw. als Material ein Aluminium oder dergleichen vorgesehen sein. Sofern die Folie zwischen zwei flächenförmigen Trägern aufgenommen wird oder durch einen flächenförmigen Träger gehalten ist, kann dieser flächenförmige Träger bspw. aus einer Glasplatte oder einem Silizium-Wafer Material oder dergleichen ausgebildet sein.

Bei dem im Strahlengang der Sekundärstrahlung 18 angeordneten Filter 23 werden aufgrund des Einstellwinkels der Filterebene zum Strahlengang einzelne Wellen bzw. Strahlen selektiert und an der Filterschicht gebeugt. Die daraus resultierende Bragg-Streuung 29 wird gegenüber dem Detektor 20 abgelenkt und von einem zweiten Detektor 32 erfasst. Die den Filter 23 durchdringende Strahlung bildet dann die vom Detektor 20 zu detektierende Strahlung 27. Durch diese weitere Detektion der reflektierten Strahlung kann überwacht werden, ob der Winkel für die Bragg-Streuung richtig eingestellt ist, um die gewünschte Strahlung zu reflektieren beziehungsweise auszukoppeln. Darüber hinaus kann durch eine geringe Änderung der Winkellage das Optimum der Einstellung der Winkellage zur maximalen Reflexion der zu selektierenden Strahlung erfolgen.

Mittels einer schematisch dargestellten Einstelleinrichtung 31 kann der Winkel α des Filters 23 zum Strahlengang der Sekundärstrahlung 18 manuell oder über eine Steuerung eingestellt werden. Alternativ kann der Filter 23 auch in einer festen Position angeordnet sein. Der Winkel α ist abhängig von der zu absorbierenden Wellenlänge der Strahlung als auch der Filterschicht 25 bzw. der oder den kristallinen Schichten.

In einer nicht dargestellten alternativen Ausführungsform kann vorgesehen sein, dass sowohl im Strahlengang der Primärstrahlung 16 als auch im Strahlengang der Sekundärstrahlung 18 jeweils ein Filter 23 angeordnet ist. Dabei können die kristallinen Schichten zur Bildung der Filterschicht 25 in der Art und/oder in der Anzahl auch voneinander abweichen.

Des Weiteren kann alternativ vorgesehen sein, dass zwei oder mehrere Filter 23 hintereinander in einen Strahlengang für einen Transmissionsmodus positioniert werden, die jeweils separat ansteuerbar sind.

Diese Vorrichtung 11 zur Röntgenfluoreszenzanalyse kann sowohl energiedispersiv als auch wellenlängendispersiv betrieben werden, wobei eine entsprechende Anpassung des Detektors 20 erfolgt.

Zur Durchführung der Röntgenfluoreszenzanalyse für ein Legierungselement wird bei einer Vorrichtung gemäß Figur 1 der einzustellende Winkel α aufgrund der zumindest einen kristallinen Filterschicht 25 des zumindest einen Filters 23 bestimmt und eingestellt, so dass nur die gewünschten, zu detektierenden Wellenlängen des Sekundärstrahls 18 zum Detektor 20 gelangen und die störende Strahlung durch die Braggsche Reflexion eliminiert wird.

Des Weiteren können zur simultanen Ausfilterung mehrerer störender Wellenlängen auch mehrere Filter 23 hintereinander im Primär- oder Sekundärstrahl positioniert werden.

## Patentansprüche

1. Verfahren zur Durchführung einer Röntgenfluoreszenzanalyse, bei dem von einer Röntgenstrahlungsquelle (14) eine Primärstrahlung (16) auf einen Probenkörper (12) gerichtet wird, bei dem eine vom Probenkörper (12) emittierte Sekundärstrahlung (18) von einem Detektor (20) erfasst und mit einer Auswerteeinheit (21) ausgewertet wird, wobei in den Strahlengang der Sekundärstrahlung (18) zumindest ein Filter (23) mit zumindest einer eine Filterebene bildende Filterschicht (25) als Transmissionsfilter eingebracht wird, **dadurch gekennzeichnet,**
- **dass** der Filter (23) in Abhängigkeit eines Winkels α der Filterschicht (25) zur Sekundärstrahlung (18) als Bandfilter wirkt und eine störende Wellenlänge der Sekundärstrahlung (18) durch Braggsche Reflexion ausgekoppelt wird, und
- **dass** der Winkel α der Filterschicht (25) des Filters (23) zur Reflexion von zumindest einer störenden Wellenlänge der Sekundärstrahlung (18) durch Braggsche Reflexion mit einer Einstelleinrichtung (31) eingestellt wird und die ausgekoppelte Wellenlänge der Sekundärstrahlung (18) von einem zweiten Detektor (32) erfasst sowie die daraus ermittelten Signale an die Auswerteeinheit (21) weitergeleitet werden.

2. Verfahren nach Anspruch 1, **dadurch gekennzeichnet, dass** der Winkel α der Filterschicht (25) des Filters (23) in Abhängigkeit der vom zweiten Detektor (32) erfassten Signale eingestellt wird.

3. Verfahren nach Anspruch 1 oder 2, **dadurch gekennzeichnet, dass** die Einstelleinrichtung (31) von der Auswerteeinheit (21) zur Einstellung des Winkels α der Filterschicht (25) des Filters (23) angesteuert wird.

4. Vorrichtung zur Durchführung des Verfahrens zur Röntgenfluoreszenzanalyse nach Anspruch 1, mit einer Röntgenstrahlungsquelle (14), welche eine Primärstrahlung (16) auf einen auf einem Probenträger (13) befindlichen Probenkörper (12) richtet und zur Bestimmung einer von dem Probenkörper (12) emittierten Sekundärstrahlung (18) einen Detektor (20) umfasst, wobei zumindest im Strahlengang der Sekundärstrahlung (18) zumindest ein als Transmissionsfilter ausgebildeter Filter (23) positioniert ist, der zumindest eine Filterschicht (25) aufweist, **dadurch gekennzeichnet, dass** der Filter (23) ausgebildet ist, zumindest eine Wellenlänge der Sekundärstrahlung (18) durch Braggsche Reflexion am Filter (23) reflektieren und auszukoppeln und dass ein zweiter Detektor (32) vorgesehen ist, der dazu eingerichtet ist, die ausgekoppelte Wellenlänge zu erfassen, und die daraus ermittelten Signale an die Auswerteeinheit (21) weiterzuleiten.

5. Vorrichtung nach Anspruch 4, **dadurch gekennzeichnet, dass** der Filter (23) von einer Einstelleinrichtung (31) aufgenommen ist, durch welche die Filterschicht (25) des Filters (23) zur Winkeleinstellung des Winkels α zum einfallenden Strahlengang ansteuerbar ist.

6. Vorrichtung nach Anspruch 4 oder 5, **dadurch gekennzeichnet, dass** die Auswerteeinheit (21) die Signale von dem ersten und/oder zweiten Detektor (20, 32) verarbeitet und die Einstelleinrichtung (31) von der Auswerteeinheit (21) ansteuerbar ist.

7. Vorrichtung nach einem der Ansprüche 4 bis 6, **dadurch gekennzeichnet, dass** der Filter (23) zumindest einer Filterschicht (25) aufweist, welche aus einer kristallinen Schicht ausgebildet ist und ein Träger mit einer Bohrung oder Durchbrechung vorgesehen ist und auf diesen Träger die zumindest eine Folie als Filterschicht (25) aufgeklebt oder durch Adhäsion aufgebracht ist, wobei diese zumindest eine Filterschicht (25) die Bohrung oder Durchbrechung überdeckt.

8. Vorrichtung nach Anspruch 7, **dadurch gekennzeichnet, dass** die zumindest eine Filterschicht (25) des Filters (23) als eine kristalline Grafitschicht ausgebildet ist, und vorzugsweise eine Dicke von weniger als 100 µm, insbesondere weniger als 50 µm aufweist.

9. Vorrichtung nach Anspruch 7 oder 8, **dadurch gekennzeichnet, dass** die Filterschicht (25) des Filters (23) aus der kristallinen Schicht oder kristallinen Graphitschichten als Folie ausgebildet ist.

10. Vorrichtung nach einem der Ansprüche 7 bis 9, **dadurch gekennzeichnet, dass** die zumindest eine Filterschicht (25) metallschichtfrei ausgebildet ist.

11. Vorrichtung nach einem der Ansprüche 7 bis 10, **dadurch gekennzeichnet, dass** die als Folie ausgebildete Filterschicht (25) auf einer Glasplatte mit einer mittigen Öffnung vorgesehen ist, auf welcher die als Folie ausgebildete Filterschicht (25) aufgeklebt oder durch Adhäsion aufgebracht ist.

## Claims

1. Method for carrying out an X-ray fluorescence analysis, in which a primary radiation (16) is aimed at a sample body (12) from an X-ray radiation source (14), in which a secondary radiation (18) emitted from the sample body (12) is detected by a detector (20) and is evaluated by an evaluation unit (21), wherein
- at least one filter (23) having at least one filter layer (25) forming a filter level as a transmission filter is introduced into the beam path of the secondary radiation (18), **characterised in that** the filter (23) depending on an angle α of the filter layer (25) relative to the secondary radiation (18), acts as a band-pass filter and a disruptive wavelength of the secondary radiation (18) is decoupled by Bragg reflection, and
- the angle α of the filter layer (25) of the filter (23) is adjusted with an adjustment device (31) for the reflection of at least one disruptive wavelength of the secondary radiation (18) by Bragg reflection, and the decoupled wavelength of the secondary radiation (18) is detected by a second detector (32), and the signals identified from this are forwarded to the evaluation unit (21).

2. Method according to claim 1, **characterised in that** the angle α of the filter layer (25) of the filter (23) is adjusted depending on the signals detected by the second detector (32).

3. Method according to claim 1 or 2, **characterised in that** the adjustment device (31) is controlled by the evaluation unit (21) for the adjustment of the angle α of the filter layer (25) of the filter (23).

4. Device for X-ray fluorescence analysis for carrying out the method according to claim 1, having an X-radiation source (14), which directs a primary radiation (16) at a sample body (12) located on a sample carrier (13) and comprises a detector (20) for the determination of secondary radiation (18) emitted from the sample body (12), wherein at least one filter (23) provided as a transmission filter is positioned at least in the beam path of the secondary radiation (18), said filter (23) having at least one filter layer (25), **characterised in that** the transmission filter (23) is provided for at least one wavelength of the secondary radiation (18) to be reflected and decoupled by Bragg reflection at the filter (23), and **in that** a second detector (32) is provided which detects the decoupled wavelength and forwards the signals identified therefrom to the evaluation unit (21).

5. Device according to claim 4, **characterised in that** the filter (23) is received by an adjustment device (31), with which the filter layer (25) of the filter (23) is able to be controlled for the angular adjustment of the angle α relative to the incident beam path.

6. Device according to claim 4 or 5, **characterised in that** the evaluation unit (21) processes the signals from the first and/or second detector (20, 32) and the adjustment device (31) is controllable by the evaluation unit (21).

7. Device according to one of claims 4 to 6, **characterised in that** the filter (23) comprises at least one filter layer (25) which is formed of a crystalline layer and a carrier is provided with a bore or an opening and at least one film as filter layer (25) is adhered or applied by adhesion on the carrier wherein the at least one filter layer (25) covers the bore or the opening.

8. Device according to claim 7, **characterised in that** the at least one filter layer (25) of the filter (23) is formed as a crystalline graphite layer and preferably has a thickness of less than 100 µm, in particular less than 50 µm.

9. Filter according to claim 7 or 8, **characterised in that** the filter layer (25) of the filter (23) is formed as a film from the crystalline layer or crystalline graphite layers.

10. Device according to one of claims 7 to 9, **characterised in that** the at least one filter layer (25) is formed to be free of metallic layers.

11. Device according to one of claims 7 to 10, **characterised in that** the filter layer (25), that is formed as a film, is provided on a glass plate having an opening in the centre, on which the filter layer (25), that is designed as a film, is adhered or applied by adhesion.

## Revendications

1. Procédé destiné à réaliser une analyse par fluorescence X, lors duquel un rayonnement primaire (16) est dirigé sur un corps d'échantillon (12) à partir d'une source de rayonnement X (14), lors duquel un rayonnement secondaire (18) émis par le corps d'échantillon (12) est saisi par un détecteur (20) et est interprété grâce à une unité d'interprétation (21), au moins un filtre (23) pourvu d'au moins une couche filtrante (25) qui forme un plan de filtrage étant mis en place, en tant que filtre de transmission, dans le trajet des rayons du rayonnement secondaire (18), **caractérisé en ce que**
- le filtre (23) agit en tant que filtre de bande en fonction d'un angle α formé par la couche filtrante (25) par rapport au rayonnement secondaire (18) et **en ce qu'**une longueur d'onde parasite du rayonnement secondaire (18) est découplée selon la réflexion de Bragg, et
- l'angle α de la couche filtrante (25) du filtre (23) est réglé grâce à un système de réglage (31) en vue de réfléchir, selon la réflexion de Bragg, au moins une longueur d'onde parasite du rayonnement secondaire (18) et **en ce que** la longueur d'onde découplée du rayonnement secondaire (18) est saisie par un deuxième détecteur (32) et que les signaux ainsi déterminés sont acheminés vers l'unité d'interprétation (21).

2. Procédé selon la revendication 1, **caractérisé en ce que** l'angle α de la couche filtrante (25) du filtre (23) est réglé en fonction des signaux saisis par le deuxième détecteur (32).

3. Procédé selon la revendication 1 ou 2, **caractérisé en ce que** le système de réglage (31) est activé par l'unité d'interprétation (21) en vue de régler l'angle α de la couche filtrante (25) du filtre (23) .

4. Dispositif destiné à réaliser le procédé d'analyse par fluorescence X selon la revendication 1, avec une source de rayonnement X (14) qui dirige un rayonnement primaire (16) sur un corps d'échantillon (12) situé sur un support d'échantillon (13) et comprend un détecteur (20) en vue de déterminer un rayonnement secondaire (18) émis par le corps d'échantillon (12), au moins un filtre (23) réalisé sous forme de filtre de transmission et présentant au moins une couche filtrante (25) étant positionné au moins dans le trajet des rayons du rayonnement secondaire (18), **caractérisé en ce que**
- le filtre (23) est conçu pour réfléchir et découpler selon la réflexion de Bragg au moins une longueur d'onde du rayonnement secondaire (18) au niveau du filtre (23) et
- il est prévu un deuxième détecteur (32) qui est conçu pour saisir la longueur d'onde découplée et pour acheminer les signaux ainsi déterminés vers l'unité d'interprétation (21).

5. Dispositif selon la revendication 4, **caractérisé en ce que** le filtre (23) est reçu par un système de réglage (31) grâce auquel la couche filtrante (25) dudit filtre (23) peut être activée en vue de régler l'angle α par rapport au trajet des rayons incidents.

6. Dispositif selon la revendication 4 ou 5, **caractérisé en ce que** l'unité d'interprétation (21) traite les signaux provenant du premier et/ou du deuxième détecteur (20, 32) et que le système de réglage (31) peut être activé par l'unité d'interprétation (21).

7. Dispositif selon l'une quelconque des revendications 4 à 6, **caractérisé en ce que** le filtre (23) présente au moins une couche filtrante (25) qui est formée par une couche cristalline, et **en ce qu'**il est prévu un support pourvu d'une perforation ou ouverture et que sur ledit support est collée ou appliquée par adhésion ladite au moins une feuille en tant que couche filtrante (25), cette dite au moins une couche filtrante (25) recouvrant la perforation ou ouverture.

8. Dispositif selon la revendication 7, **caractérisé en ce que** ladite au moins une couche filtrante (25) du filtre (23) est réalisée sous la forme d'une couche cristalline de graphite et présente de préférence une épaisseur inférieure à 100 µm, en particulier inférieure à 50 µm.

9. Dispositif selon la revendication 7 ou 8, **caractérisé en ce que** la couche filtrante (25) du filtre (23) est réalisée sous forme de feuille à partir de la couche cristalline ou de la couche cristalline de graphite.

10. Dispositif selon l'une quelconque des revendications 7 à 9, **caractérisé en ce que** ladite au moins une couche filtrante (25) est réalisée sans couche métallique.

11. Dispositif selon l'une quelconque des revendications 7 à 10, **caractérisé en ce que** la couche filtrante (25) réalisée sous forme de feuille est prévue sur une plaque de verre pourvue d'une ouverture centrale sur laquelle est collée ou appliquée par adhésion la couche filtrante (25) réalisée sous forme de feuille.
